# EUROPEAN PATENT APPLICATION

(11) **EP 1 186 513 A2**
(43) Date of publication of application: **13.03.2002**
(21) Application number: 01120715.6
(22) Date of filing: 04.09.2001
(51) Int. Cl.: B62D 5/12, B62D 3/06

(54) **Steering unit having improved fluidomechanical actuation**

(30) Priority: 12.09.2000 IT MO000188
(71) Applicant: Borghi, Ivan, 41038 Villavara di Bomporto (Modena) (IT)
(72) Inventor: Borghi, Ivan, 41038 Villavara di Bomporto (Modena) (IT)
(74) Representative: Modiano, Guido, Dr.-Ing.

(57) **Abstract**

A steering unit having improved fluidomechanical actuation comprises: a fixed container body (2), which is substantially cylindrical and hollow; a shaft (3), mounted so as to be rotatable in the body (2) about its own longitudinal axis (4); closure means (5, 6) for closing the body (2), which are adapted to form a chamber (7) crossed by the shaft (3); a piston (8) which is inserted so that it can slide with a reciprocating rectilinear motion in the chamber (7) and cooperate with the shaft (3); and means for distributing a pressurized fluid, which are connected to the chamber (7); interaction means (11) are interposed between the piston (8) and the shaft (3) and are adapted to convert the reciprocating rectilinear motion of the piston (8) into a rotary motion of the shaft (3).

## Description

The present invention relates to a steering unit having improved fluidomechanical actuation.

Conventional hydromechanically-actuated rotary actuators are used to turn, through preset angles and in preset times, components of devices such as e.g. valves, turntables, doors, tilting structures (dump boxes), worktables of machine tools, manipulators, conveyance lines, mechanisms that are part of bending machines, agricultural machines, and drilling machines.

Conventional actuators comprise a generally cylindrical box-like body, which accommodates a plurality of toothed couplings arranged in succession which are substantially constituted by mutually interacting coaxial gears designed to convert the reciprocating rectilinear motion of one or more pistons, produced by the action of a pressurized fluid, into the rotary motion of a shaft.

These conventional actuators are not free from drawbacks, including the fact that they have a complex structure which is complicated to manufacture because it has a plurality of toothed couplings, each of which requires the execution of accurate mechanical machining operations, and have, as a whole, high costs both for production and for marketing.

Hydromechanically-actuated rotation and/or steering units are also known which are constituted by a rotating shaft rigidly coupled to a hub supporting pivot; a pinion is keyed onto the shaft and is coupled to a rack, whose axial movements are produced by two hydraulic cylinders which are respectively associated with its opposite ends.

These conventional steering units, however, suffer from drawbacks, including the fact that they do not allow to adjust the steering angle over a full 360°, thus limiting the maneuverability of the vehicles and/or devices whereto they are applied, and that they are significantly bulky, thus limiting their possibilities of use.

The aim of the present invention is to eliminate the above-mentioned drawbacks of actuators by providing a steering unit having improved fluidomechanical actuation whose structure is constructively less complex and is therefore simpler to manufacture, whose dimensions are limited, and whose production costs are low, consequently increasing the number of possible applications and expanding the fields of use and marketing.

An object of the present invention is to allow to adjust the steering angle over a full 360° and to improve the maneuverability of the vehicles and/or devices to which it is applied.

Within this aim, another object of the present invention is to provide a steering unit having improved fluidomechanical actuation and a structure that is relatively easy to provide in practice, safe in use, and effective in operation.

This aim and these and other objects which will become better apparent hereinafter are achieved by the present steering unit having improved fluidomechanical actuation, characterized in that it comprises a fixed container body which is substantially cylindrical and hollow, a shaft mounted so as to be rotatable in said body about its own longitudinal axis, closure means for closing said body being adapted to form a chamber crossed by said shaft, a piston which is inserted so as to be slideable with a reciprocating rectilinear motion in said chamber and cooperates with said shaft, and means for distributing a pressurized fluid which are connected to said chamber, interaction means being interposed between said piston and said shaft and being adapted to convert said reciprocating rectilinear motion of the piston into a rotary motion of said shaft.

Further characteristics and advantages of the present invention will become better apparent from the following detailed description of a preferred but not exclusive embodiment of a steering unit having improved fluidomechanical actuation, illustrated only by way of non-limitative example in the accompanying drawings, wherein:

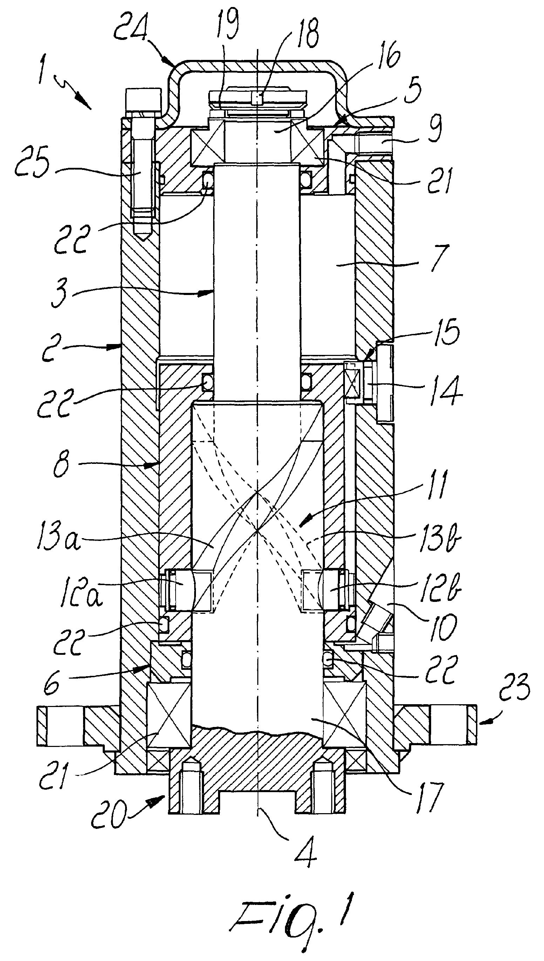

Figure 1 is a schematic sectional view of a unit according to the invention;
Figure 2 is a schematic view of a form of application of the unit according to the invention.

With reference to the figures, the reference numeral 1 generally designates a steering unit having improved fluidomechanical actuation.

The unit 1 comprises: a fixed container body, such as a sleeve 2, which is substantially cylindrical and is internally hollow; a shaft 3, which is mounted so that it can rotate about its own longitudinal axis, designated by the reference numeral 4, in the sleeve 2; and closure means, constituted by two plugs 5 and 6 which close the cavity of the sleeve 2, forming inside it a chamber 7 which is crossed by the shaft 3.

A piston 8 is inserted in the chamber 7, can slide with a reciprocating rectilinear motion and cooperates with the shaft 3; the motion of the piston 8 is produced by the action of a pressurized fluid, which is introduced in, and discharged from, the chamber 7 by way of distribution means connected thereto, which are not shown because they are conventional, and are connected to the chamber 7 through intake and discharge ports 9 and 10.

The port 9 is formed in the plug 5 and the port 10 is formed in the lateral walls of the sleeve 2.

The unit 1 further comprises interaction means 11, which are interposed between the piston 8 and the shaft 3 and are adapted to convert the reciprocating rectilinear motion of the piston 8 into the rotary motion of the shaft 3.

The interaction means 11 comprise two pusher elements, constituted by two pins 12a and 12b which are rigidly coupled to the piston 8 and can slide respectively in guides having a substantially helical profile which are constituted by two slots 13a and 13b formed in the shaft 3.

The pins 12a and 12b are arranged so as to protrude centripetally with respect to the piston 8 and so that their longitudinal axes are substantially coplanar, so as to form a plane which is perpendicular to the axis 4.

The unit 1 is further provided with means for preventing the rotation of the piston 8, such as a locking pin 14, which prevents its rotation with respect to the sleeve 2.

The locking pin 14 is inserted in a seat 15 formed in the side walls of the sleeve 2 and is arranged so that its longitudinal axis is substantially perpendicular to the axis 4, so that its head remains external to the chamber 7 and its opposite end protrudes into said chamber 7 so as to interfere with the lateral surface of the piston 8.

The opposite ends 16 and 17 of the shaft 3 protrude outside the chamber 7: the end 16 is coupled to the plug 5 by means of a locking ring 18 and a safety ring 19, while the end 17 is provided with a coupling 20, e.g. for wheel supporting stems.

The shaft 3 is mounted in the sleeve 2 by interposing a plurality of conventional-type bearings 21 suitable to allow its rotation with minimal friction.

A plurality of gaskets 22, such as e.g. toroidal rings made of elastomeric material, are inserted between the plugs 5 and 6 and the shaft 3 and between the piston 8, the shaft 3 and the sleeve 2.

Advantageously, the sleeve 2 is rigidly coupled to a fixing plate 23 and is protected by a cap 24, which is fixed thereto by means of screw means 25.

The operation of the invention is as follows: a pressurized fluid is introduced in the chamber 7 through the ports 9 and 10 and acts on the opposite faces of the piston 8, making it perform a translational motion parallel to the axis 4; the piston 8 can only move with a reciprocating rectilinear motion parallel to the axis 4, since its rotation is prevented by the locking pin 14.

The two pins 12a and 12b are rigidly coupled to the structure of the piston 8 and respectively engage the helical slots 13a and 13b formed in the shaft 3; the reciprocating rectilinear motion of the piston 8 causes the pins 12a and 12b to impart a corresponding rotation to the shaft 3, which is produced by the helical profiles of the slots 13a and 13b in which they are engaged.

The sleeve 2 is fixed to a supporting structure by means of the fixing plate 23.

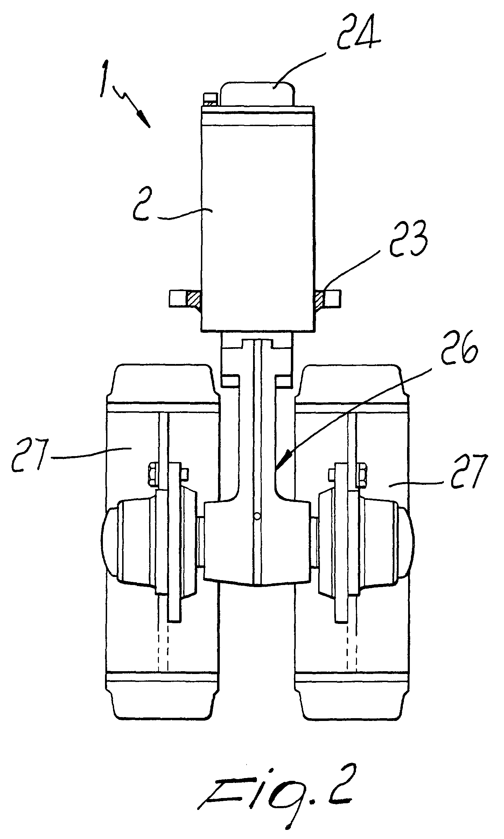

Advantageously, the unit 1 according to the invention is applied in the production of steering devices, particularly in vehicles for transporting materials, such as for example lift trucks (Figure 2).

By fixing the sleeve 2 to the supporting structure of a truck in a substantially vertical position it is possible to insert in the coupling 20 the stem 26 for supporting hubs of wheels 27.

Conveniently, each wheel can have its own steering device, provided by means of the unit 1 and connected to the others so as to ensure matching steering angles.

In practice it has been observed that the described invention achieves the intended aim and objects by providing a steering unit whose structure is constructively simpler, because it has a smaller number of mechanical couplings with respect to conventional actuators, whose dimensions, specifically the radial ones, are modest, thus allowing to adopt said unit in applications such as the production of steering devices, and whose manufacturing and marketing costs are limited, since it requires a smaller number of mechanical components and of manufacturing processes.

Moreover, the steering unit according to the invention allows to adjust the breadth of the steering angle, which currently has a maximum value of 80°-90°, over the entire arc between 0° and 360°; this leads to an advantageous increase in the maneuverability of the lift trucks to which it is applied, i.e. to an increase in the possibility to change the direction of travel of the trucks in smaller spaces.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. M02000A000188 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A steering unit having improved fluidomechanical actuation, **characterized in that** it comprises a fixed container body (2) which is substantially cylindrical and hollow, a shaft (3) which is mounted so as to be rotatable in said body (2) about its own longitudinal axis (4), closure means (5, 6) for closing said body (2) being adapted to form a chamber (7) crossed by said shaft (3), a piston (8) which is inserted so as to be slideable with a reciprocating rectilinear motion in said chamber (7) and cooperate with said shaft (3), and distribution means for distributing a pressurized fluid which are connected to said chamber (7), interaction means (11) being interposed between said piston (8) and said shaft (3) and being adapted to convert said reciprocating rectilinear motion of the piston (8) into a rotary motion of said shaft (3).

2. The unit according to claim 1, **characterized in that** said interaction means (11) comprise at least two pusher elements (12a, 12b) which are rigidly coupled to said piston (8) and protrude centripetally with respect to it, said pusher elements (12a, 12b) being sliding engaged in respective guides (13a, 13b) which have a substantially helical profile and are formed in said shaft (3).

3. The unit according to claim 2, **characterized in that** said pusher elements are constituted by pins (12a, 12b).

4. The unit according to claim 2 or 3, **characterized in that** said guides are constituted by slots (13a, 13b) formed in said shaft (3).

5. The unit according to one or more of the preceding claims, **characterized in that** it comprises means (14) for preventing the rotation of said piston (8) with respect to said body (2).

6. The unit according to one or more of the preceding claims, **characterized in that** said closure means are constituted by two plugs (5, 6) which are arranged so as to close the opposite ends of said body (2), so as to form said chamber (7) inside said body (2).
